# FASCICULE DE BREVET EUROPEEN

(11) **EP 0 521 785 B1**
(45) Date de publication et mention de la délivrance du brevet: **06.12.1995**
(21) Numéro de dépôt: 92401881.5
(22) Date de dépôt: 01.07.1992
(51) Int. Cl.: F16D 65/12, F16D 65/847

(54) **Disque de freinage monobloc, notamment pour véhicule ferroviaire, et roue correspondante**
Monoblock Bremsscheibe, insbesondere für Schienenfahrzeug, und entsprechendes Rad
Monobloc brake disc, especially for rail vehicle, and corresponding wheel

(30) Priorité: 01.07.1991 FR 9108169
(43) Date de publication de la demande: 07.01.1993
(73) Titulaire: SOCIETE EUROPEENNE D' ENGRENAGES, F-89107 Sens Cédex (FR)
(72) Inventeur: Davion, Philippe, F-89190 Pont S/Vanne (FR); Hennequin, Paul, F-89100 Fontaine-la-Gaillarde (FR); Huver, Francis, F-89760 Theil S/Vanne (FR)
(74) Mandataire: Jacobson, Claude

(56) Documents cités:
- FR-A- 2 287 623
- FR-A- 2 295 304

## Description

La présente invention est relative à un disque de freinage monobloc destiné à être monté en flasque sur une roue, notamment de véhicule ferroviaire.

Par "disque monobloc", on entend un disque gui est en une seule pièce lorsqu'il est réalisé. Il peut en particulier s'agir d'une pièce moulée unique, en acier ou en fonte, ou d'une pièce composite fonte/acier réalisée par surmoulage.

Les disques de freinage de ce type sont utilisés notamment pour freiner les roues sans essieu de motrices de trains, de voitures de chemin de fer et de wagons de marchandises. Leur échauffement sur une seule face lors du freinage est à la source de différents problèmes liés aux dilatations différentielles :
- si le voile est très rigide pour empêcher les déformations du disque, des contraintes très élevées apparaissent, et de plus il est nécessaire de laisser une possibilité de glissement dans la zone de fixation du voile sur le moyeu, ce qui conduit à des phénomènes de fretting-corrosion;
- si au contraire, pour éviter ces phénomènes, on donne au voile une grande souplesse radiale, à la manière de ce gui est décrit, dans un agencement voisin, dans le FR-A-2 287 623, on observe une déformation en cône du patin lors du freinage, et par suite une usure non uniforme des garnitures du frein; ceci est particulièrement gênant lorsque les garnitures sont guidées en translation parallèlement à l'axe de la roue. De plus, la forme essentiellement axiale du voile est défavorable du point de vue du poids, de la facilité de moulage et de la circulation de l'air de refroidissement le long du patin.

Comme on le comprend, les phénomènes défavorables indiqués ci-dessus s'aggravent considérablement lorsque l'énergie de freinage augmente, comme c'est le cas actuellement avec l'accroissement des vitesses de circulation des trains et des charges appliquées à chaque disque de freinage.

Le FR-A-2 295 304 décrit un disque de freinage comportant un patin annulaire divise en deux secteurs par des fentes, mais il ne s'agit pas d'un disque monobloc au sens indiqué plus haut.

L'invention a pour but de fournir un disque de freinage qui, malgré un prix de revient relativement bas, permet d'absorber des énergies de freinage élevées avec une faible déformation.

A cet effet, l'invention a pour objet un disque de freinage monobloc destiné à être monté en flasque sur une roue, notamment de véhicule ferroviaire, caractérisé en ce qu'il comprend :
- un patin annulaire rigide libre à sa périphérie extérieure et à sa périphérie intérieure, divisé en secteurs par une série de fentes et relié par une série d'ailettes à un talon d'appui axial sur la roue; et
- à une périphérie du disque, un voile mince axialement élastique relié au talon d'appui, ce voile étant muni à sa périphérie opposée au talon d'une zone de fixation sur la roue, cette zone de fixation étant adaptée pour être plaquée contre une surface à peu près radiale de la roue en déformant axialement le voile.

Suivant d'autres caractéristiques :
- le voile a une orientation à peu près radiale;
- le voile comporte une partie oblique aboutissant à la zone de fixation;
- le talon présente une surface d'appui sur la roue située en regard d'une partie radialement extérieure du patin;
- chaque ailette est reliée d'une part au patin, d'autre part au talon suivant deux côtés opposés à peu près de même longueur;
- lesdits côtés sont situés à peu près en regard l'un de l'autre;
- chaque ailette est contenue dans un plan axial et radial;
- le talon est continu sur toute son étendue, ou bien, en variante, évidé entre les ailettes.

L'invention a également pour objet une roue, notamment pour véhicule ferroviaire, munie sur chaque côté d'un disque tel que défini ci-dessus, la périphérie du voile opposée au talon étant fixée sous précontrainte axiale et sans liberté de mouvement sur ladite surface à peu près radiale du moyeu de la roue.

Un exemple de réalisation de l'invention va maintenant être décrit en regard des dessins annexés, sur lesquels :
- la Figure 1 est une demi-vue en coupe axiale d'une roue de véhicule ferroviaire conforme à l'invention;
- la Figure 2 est une vue partielle du côté intérieur d'un disque de cette roue;
- la Figure 3 est une vue prise en coupe suivant la ligne III-III de la Figure 2;
- la Figure 4 illustre, de façon très amplifiée, la déformation du disque des Figures 2 et 3 lors de son montage sur la roue;
- la Figure 5 illustre de façon analogue la déformation du disque après montage et lors d'un freinage; et
- la Figure 6 est une vue analogue à la Figure 1 d'une variante.

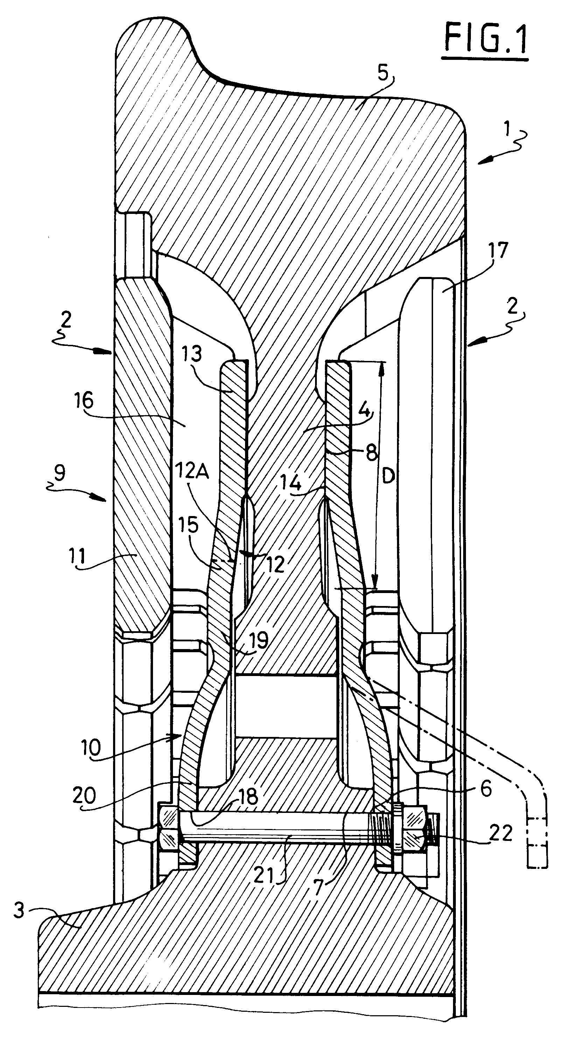

On voit sur la Figure 1 une roue 1 de véhicule ferroviaire, gui peut notamment être une roue de motrice, équipée de deux disques de freinage identiques 2.

La roue 1 comprend un moyeu 3 relié par un voile radial 4 à une bande de roulement 5. Le moyeu présente de chaque côté, près de sa liaison avec le voile 4, une surface radiale annulaire 6 dans laquelle sont ménagés plusieurs perçages axiaux 7, et le voile présente de chaque côté, près de sa liaison avec la bande de roulement, une surface radiale annulaire 8.

Chaque disque 2 est réalisé d'une seule pièce par moulage, notamment en fonte ou en acier, et est constitué d'une partie radialement extérieure 9 recevant l'effort de freinage et d'une partie radialement intérieure 10 servant à sa fixation sur la roue.

La partie extérieure 9 comprend un anneau plat 11 de forte épaisseur, très rigide, constituant un patin de freinage, et un talon annulaire 12 d'épaisseur plus faible. Ce dernier comprend une partie radialement extérieure 13 dont la face interne 14 est radiale et située en regard de la surface 8 associée, et une partie radialement intérieure 15 qui s'écarte progressivement du voile 4 de la roue.

La dimension radiale totale D du talon 12 est du même ordre que celle de la face interne du patin 11, laquelle se trouve radialement à peu près en regard de ce talon. Des ailettes axiales et radiales 16 de forme à peu près rectangulaire relient la face externe du talon, sur toute sa dimension D, à la face interne du patin.

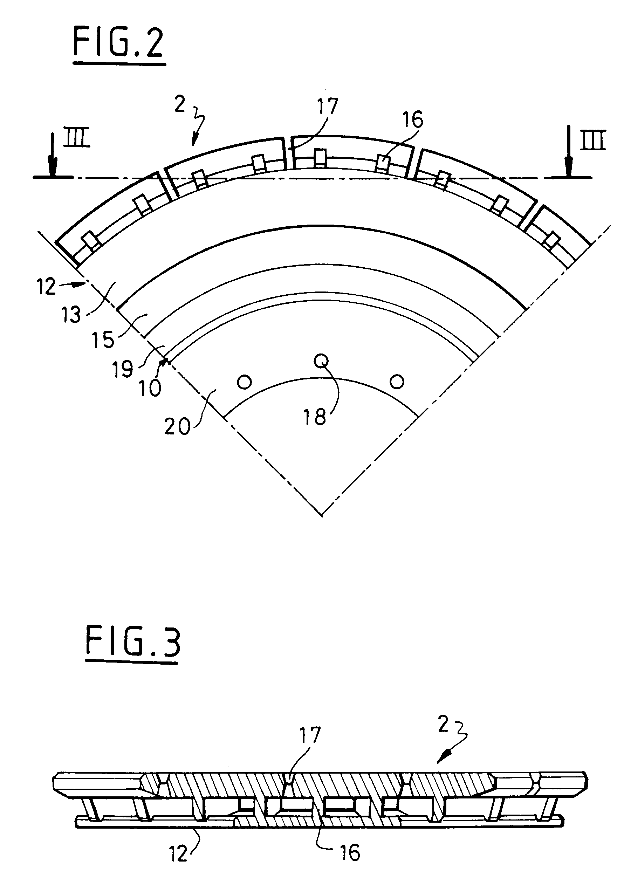

Chaque patin 11 est divisé en secteurs par des fentes radiales 17 (Figures 2 et 3) espacées angulairement de 20°, chaque fente s'étendant de la périphérie extérieure à la périphérie intérieure du patin. Il est prévu deux ailettes 16 entre chaque paire de fentes, soit trente-six ailettes en tout. En revanche, le talon 12 est continu sur tout son pourtour et sur toute son étendue radiale.

La partie radialement intérieure 10 du disque constitue un voile de faible épaisseur, d'orientation générale radiale, gui s'étend à partir de la périphérie intérieure du talon 12. Du fait de cette forme et de sa faible épaisseur, le voile 10 est facilement déformable élastiquement dans le sens axial. Le voile 10 est continu sur son pourtour et présente près de sa périphérie intérieure une couronne d'orifices 18. Il comporte, à partir du talon 12, une partie radiale 19 de liaison, puis une partie 20 légèrement bombée dont la partie d'extrémité intérieure, sensiblement radiale, comporte les orifices 18.

Pour monter les deux disques sur la roue, on fait passer des boulons 21 à travers les orifices 18 des deux voiles et les perçages 7 de la roue, et on serre ces boulons au moyen d'écrous 22. Ce faisant, on déforme axialement de façon élastique la partie 20 des deux voiles jusqu'à les appliquer fermement contre les surfaces 6 du moyeu, sans possibilité de mouvement relatif. Cette déformation des voiles 10 a pour effet de plaquer également les parties 13 des deux talons contre les surfaces 8 de la roue, les surfaces 6 et 8 étant les seules zones de contact entre la roue et les disques. Comme on le voit sur la Figure 1, les voiles 10 se trouvent alors entièrement en dehors de la région délimitée par les deux plans extrêmes des patins.

En variante, les ensembles boulon 21-écrou 22 peuvent être remplacés par des paires de vis vissées dans des alésages borgnes taraudés remplaçant les perçages 7.

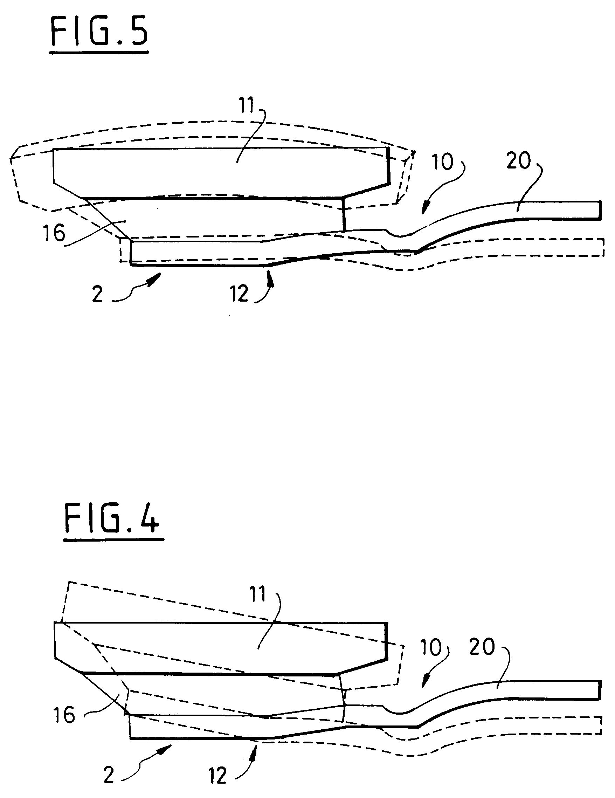

La Figure 4 représente en traits pleins un disque à l'état libre et en pointillé le même disque à l'état monté. On voit que lorsqu'il est monté, le patin 11 du disque subit, à froid, une légère déformation conique convergente.

La Figure 5 représente également en trait plein un disque à l'état libre, et elle représente en pointillé le même disque à l'état monté sur la roue et ayant subi un freinage. Du fait de l'échauffement, le patin 11 se déforme en se redressant et en se bombant dans sa zone médiane, et il revient ainsi à une section très voisine de celle qu'il possédait à l'état libre. L'usure des garnitures de frein est ainsi réduite, même si celles-ci ne possèdent qu'un degré de liberté, en translation parallèle à l'axe de la roue. Ce résultat est obtenu sans aucun déplacement relatif entre la partie intérieure du voile et la surface 6, et donc sans risque de fretting-corrosion. Une autre conséquence favorable réside dans le fait que les contraintes, dans le voile et dans les ailettes, restent très en deçà des valeurs limites de fatigue du matériau.

De plus, la forme presque radiale du voile laisse à l'air un libre accès vers l'espace compris entre le patin et le talon, de sorte que le refroidissement du disque est très efficace même en l'absence d'aubages de propulsion d'air, grands consommateurs d'énergie. Cette forme est par ailleurs relativement facile à mouler et nécessite une quantité de matière minimale.

Il est encore à noter que la forme à peu près rectangulaire des ailettes 16 est particulièrement favorable à une évacuation rapide de la chaleur hors du patin lors du freinage, de même que la position des surfaces d'appui 14, en regard de la région radialement extérieure du patin.

A titre d'exemple numérique, pour un disque ayant un patin de 45 cm de diamètre intérieur et de 72 cm de diamètre extérieur, le déplacement axial de l'extrémité intérieure du voile 10, dont le diamètre intérieur est 26 cm, lors du montage du disque peut être de l'ordre de 0,3 mm.

En variante, l'ensemble patin 11-talon 12-ailettes 16 peut être réalisé d'une seule pièce par moulage, notamment en fonte, puis fixé par surmoulage sur le voile 10 réalisé séparément, notamment en acier.

Dans certains cas, comme illustré en trait mixte sur la Figure 1, on peut être amené, du fait de la configuration de la roue, à donner à la partie intermédiaire du voile une orientation oblique s'écartant nettement de la direction radiale, dans la mesure où le voile conserve une élasticité suffisante dans le sens axial pour permettre à son extrémité libre 20 de s'appliquer sur la surface radiale 6 de la roue en déformant élastiquement le voile.

En variante également, pour alléger la pièce et faciliter le moulage, des encoches peuvent être prévues dans le talon 12 entre les ailettes 16 à partir du bord extérieur, comme indiqué en trait mixte en 12A sur la Figure 1.

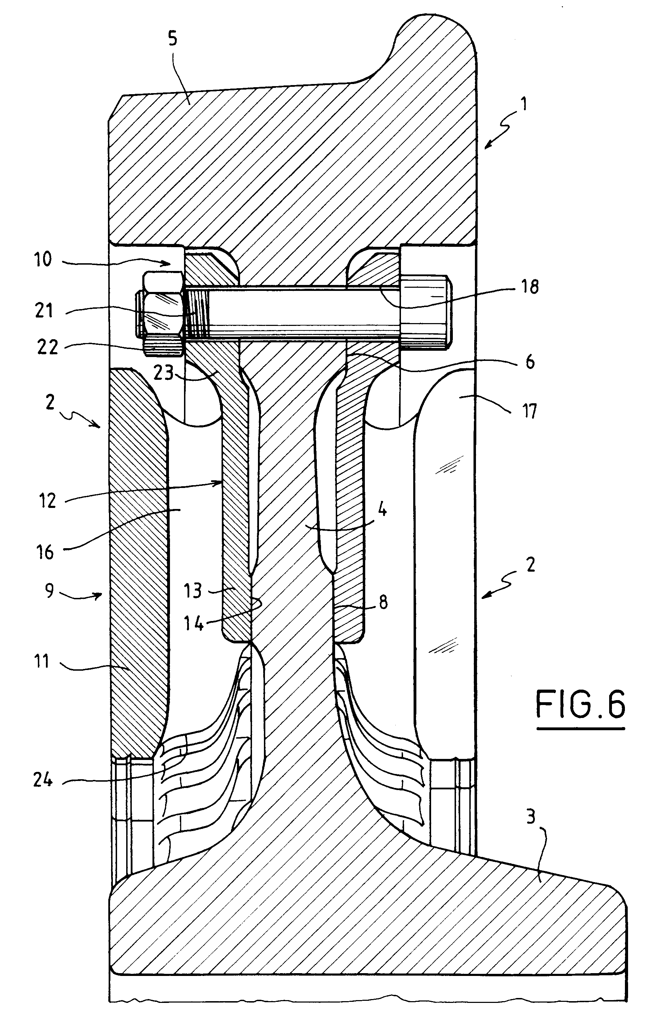

Dans d'autres cas, il n'est pas possible de percer axialement la région du moyeu de la roue. On peut alors utiliser l'agencement inversé de la Figure 6, qui diffère de celui de la Figure 1 par les points suivants :
- la surface radiale 6 est prévue à l'extrémité extérieure du voile 4, près de la bande de roulement 5;
- la surface d'appui 8 est plus proche du moyeu 3 que de la bande de roulement 5, pour assurer la stabilité du disque lors du freinage;
- le voile 10 du disque prolonge le talon 12 vers l'extérieur. Il comporte une partie épaisse 20 de fixation, plaquée sous précontrainte axiale sur la surface 6 adjacente, et une partie mince 23, à peu près radiale, de liaison de la partie 20 au talon 12;
- le patin 11 occupe radialement l'essentiel de l'espace disponible entre les écrous 22 et le moyeu, en s'étendant vers l'intérieur nettement au-delà du talon 12. De façon correspondante, la face radialement intérieure 24 des ailettes 16 a une forme bombée et globalement divergente du bord intérieur du patin à celui du talon.

## Revendications

1. Disque de freinage monobloc (2) destiné à être monté en flasque sur une roue (1), notamment de véhicule ferroviaire, caractérisé en ce qu'il comprend:
- un patin annulaire rigide (11) libre à sa périphérie extérieure et à sa périphérie intérieure, divisé en secteurs par une série de fentes (17) et relié par une série d'ailettes (16) à un talon (12) d'appui axial sur la roue; et
- à une périphérie du disque, un voile (10) mince axialement élastique relié au talon d'appui (12), ce voile étant muni à sa périphérie opposée au talon d'une zone (20) de fixation sur la roue, cette zone de fixation étant adaptée pour être plaquée contre une surface à peu près radiale (6) de la roue en déformant axialement le voile (10).

2. Disque selon la revendication 1, caractérisé en ce que le voile (10) a une orientation à peu près radiale.

3. Disque selon la revendication 1, caractérisé en ce que le voile (10) comporte une partie oblique aboutissant à la zone de fixation (20).

4. Disque suivant l'une quelconque des revendications 1 à 3, caractérisé en ce que le talon (12) présente une surface (14) d'appui sur la roue située en regard d'une partie radialement extérieure du patin (11).

5. Disque suivant l'une quelconque des revendications 1 à 4, caractérisé en ce que chaque ailette (16) est reliée d'une part au patin (11), d'autre part au talon (12) suivant deux côtés opposés à peu près de même longueur.

6. Disque suivant la revendication 5, caractérisé en ce que lesdits côtés sont situés à peu près en regard l'un de l'autre.

7. Disque suivant l'une quelconque des revendications 1 à 6, caractérisé en ce que chaque ailette (16) est contenue dans un plan axial et radial.

8. Disque suivant l'une quelconque des revendications 1 à 7, caractérisé en ce que le talon (12) est continu sur toute son étendue.

9. Disque suivant l'une quelconque des revendications 1 à 7, caractérisé en ce que le talon (12) est évidé entre les ailettes (16).

10. Roue (1), notamment pour véhicule ferroviaire, munie sur chaque côté d'un disque (2) suivant l'une quelconque des revendications 1 à 9, la périphérie (20) du voile (10) opposée au talon (12) étant fixée sous précontrainte axiale et sans liberté de mouvement sur ladite surface à peu près radiale (6) du moyeu (3) de la roue.

## Claims

1. One-piece brake disk (2) to be flange-mounted on a wheel (1), particularly of a rail vehicle, characterized in that it comprises a rigid, annular paid (11) free at its outer and inner periphery, divided into sectors by a series of slots (17) and connected by a series of fins (16) to a shoulder (12) axially bearing on the wheel, and on one periphery of the disk, an axially elastic, thin shell (10) connected to the bearing shoulder (12), said shell being provided on its periphery opposite to the shoulder with an area (20) for fixing to the wheel, said fixing area being engageable against an approximately radial surface (6) of the wheel by axially deforming the shell (10).

2. Disk according to claim 1, characterized in that the shell (10) has an approximately radial orientation.

3. Disk according to claim 1, characterized in that the shell (10) has an oblique portion terminating at the fixing area (20).

4. Disk according to any one of the claims 1 to 3, characterized in that the shoulder (12) has a bearing surface (14) on the wheel facing a radially outer portion of the pad (11).

5. Disk according to any one of the claims 1 to 4, characterized in that each fin (16) is connected on the one hand to the pad (11) and on the other to the shoulder (12) along two opposite sides of roughly the same length.

6. Disk according to claim 5, characterized in that said sides are approximately facing one another.

7. Disk according to any one of the claims 1 to 6, characterized in that each fin (16) is contained in an axial and radial plane.

8. Disk according to any one of the claims 1 to 7, characterized in that the shoulder (12) is continuous over its entire extent.

9. Disk according to any one of the claims 1 to 7, characterized in that the shoulder (12) is recessed between the fins (16).

10. Wheel (1), particularly for a rail vehicle, provided on each side with a disk (2) in accordance with any one of the claims 1 to 9, the periphery (20) of the shell (10) opposite to the shoulder (12) being fixed, under axial prestressing and without freedom of movement, to said approximately radial surface (6) of the wheel hub (3).

## Patentansprüche

1. Bremsscheibe in Einblockkonstruktion (2), dazu bestimmt, seitlich an einem Rad (1) insbesondere eines Schienenfahrzeugs montiert zu werden, dadurch gekennzeichnet, daß sie umfaßt:
- einen starren ringförmigen Schuh (11), der an seinem äußeren Umfang und an seinem inneren Umfang frei ist, durch eine Reihe von Schlitzen (17) in Sektoren unterteilt ist und durch eine Reihe von Rippen (16) mit einer Nase (12) zur axialen Auflage auf dem Rad verbunden ist; und
- an einem Umfang der Scheibe eine axial elastische, dünne Schürze, die mit der Auflagenase (12) verbunden ist, wobei diese Schürze an ihrem der Nase entgegensetzten Umfang mit einer Zone (20) zur Befestigung am Rad versehen ist, wobei diese Befestigungszone dafür vorgesehen ist, gegen eine annähernd radiale Oberfläche (6) des Rads gepreßt zu werden und hierbei axial die Schürze (10) zu verformen.

2. Scheibe nach Anspruch 1, dadurch gekennzeichnet, das die Schürze (10) eine etwa radiale Ausrichtung hat.

3. Scheibe nach Anspruch 1, dadurch gekennzeichnet, daß die Schürze (10) einen schrägen Teil aufweist, der an die Befestigangszone (20) anstößt.

4. Scheibe nach irgendeinem der Ansprüche 1 bis 3, dadurch gekennzeichnet, daß die Nase (12) eine Oberfläche (14) zur Auflage auf dem Rad aufweist, die einem radial äußeren Teil des Schuhs (11) gegenüberliegend angeordnet ist.

5. Scheibe nach irgendeinem der Ansprüche 1 bis 4, dadurch gekennzeichnet, daß jede Rippe (16) einerseits mit dem Schuh (11) und andererseits mit der Nase (12) verbunden ist, und zwar entlang zwei entgegengesetzten Seiten von etwa derselben Länge.

6. Scheibe nach Anspruch 5, dadurch gekennzeichnet, daß die genannten Seiten ungefähr einander gegenüberliegen.

7. Scheibe nach irgendeinem der Ansprüche 1 bis 6, dadurch gekennzeichnet, daß jede Rippe (16) in einer axialen und radialen Ebene enthalten ist.

8. Scheibe nach irgendeinem der Ansprüche 1 bis 7, dadurch gekennzeichnet, daß die Nase (12) über ihre gesamte Ausdehnung durchgehend ist.

9. Scheibe nach irgendeinem der Ansprüche 1 bis 7, dadurch gekennzeichnet, daß die Nase (12) zwischen den Rippen (16) durchbrochen ist.

10. Rad (1), insbesondere für ein Schienenfahrzeug, das auf jeder Seite mit einer Scheibe (2) nach irgendeinem der Ansprüche 1 bis 9 versehen ist, wobei der der Nase (12) entgegengesetzte Umfang (20) der Schürze (10) unter axialer Vorspannung und ohne Bewegungsfreiheit auf der annähernd radialen Oberfläche (6) der Nabe (3) des Rads befestigt ist.
